(19) Europäisches Patentamt
European Patent Office
Office européen des brevets

(11) **EP 3 444 016 A1**

(12) **DEMANDE DE BREVET EUROPEEN**

(43) Date de publication:
**20.02.2019 Bulletin 2019/08**

(51) Int Cl.:
**A63F 13/22** *(2014.01)* **A63F 13/20** *(2014.01)*
**G05G 9/047** *(2006.01)*

(21) Numéro de dépôt: **17306074.0**

(22) Date de dépôt: **17.08.2017**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(71) Demandeur: **Bigben Interactive SA**
**59273 Fretin (FR)**

(72) Inventeurs:
• **FALC, Alain**
**8500 Kortrijk (BE)**

• **ALLAERT, Yannick**
**62410 Meurchin (FR)**
• **NOTEBAERT, Alexandre**
**59200 Tourcoing (FR)**
• **DUDOYER, Stephen**
**59810 Lesquin (FR)**

(74) Mandataire: **Poindron, Cyrille et al**
**Novagraaf International SA**
**Chemin de l'Echo 3**
**1213 Onex (CH)**

(54) **PROCEDE DE CONTRÔLE D'UN ELEMENT D'AFFICHAGE PAR UNE CONSOLE DE JEUX**

(57) Procédé de contrôle d'une position d'un élément d'affichage, le procédé comprenant les étapes consistant à :
- mesurer une position d'un levier de commande,
- projeter dans un plan de base la position du levier, pour déterminer un premier jeu de coordonnées,
- déterminer une figure homothétique à une butée mécanique du levier,
- déterminer un carré circonscrit à la figure homothétique,
- projeter sur le carré circonscrit au moins une coordonnée du premier jeu de coordonnées,
- calculer un deuxième jeu de coordonnées dans un repère cartésien, sur la base de la projection de ladite au moins une coordonnée du premier jeu de coordonnées sur le carré circonscrit.

Fig. 1

EP 3 444 016 A1

**Description**

La présente invention concerne de manière générale un procédé de contrôle d'un élément d'affichage généré sur un écran d'affichage par une console de jeux vidéo accouplée à un contrôleur de jeux. En particulier, l'invention concerne le contrôle de l'élément d'affichage lorsque le contrôleur de jeux comprend un levier ou un joystick déplacé par un utilisateur pour commander la position et/ou le déplacement de l'élément d'affichage qui peut être un curseur de visée ou une scène vue par un avatar de l'utilisateur, depuis une position dans le jeu ou un poste de pilotage par exemple.

Il est connu dans l'art antérieur d'utiliser aussi bien un système de coordonnées selon un repère cartésien que polaire pour gérer la mesure de la position du levier, tel que le divulgue le document EP2450776A1. Cependant, il est souvent nécessaire de toujours envoyer à la console de jeu des coordonnées selon un système de coordonnées cartésien, en raison du format standardisé pour la console de jeux.

Il est de pratique commune de projeter les positions mesurées dans un plan de base (qui peut par exemple être perpendiculaire au levier lorsque ce dernier est en position de repos, par exemple verticale). Dans le cas où le levier peut évoluer dans une zone de déplacement limitée par une butée mécanique (telle qu'un hexagone ou autre polygone, une forme quelconque ou encore une ellipse), il est fréquent d'envoyer à la console un signal pleine échelle lorsque le levier est en butée et selon l'une des diagonales du plan de base, et de ne pas augmenter ce signal lorsque le levier passe dans des zones situées au-delà des bords d'un carré inscrit dans une projection de la butée mécanique, et ayant ses sommets sur les diagonales précitées.

La zone de déplacement prédéterminée du levier est définie comme étant une zone de l'espace dans laquelle le levier peut se déplacer avant d'entrer en butée avec par exemple le boîtier du contrôleur de jeux. Comme cela est connu, cette butée peut être un polygone, tel qu'un octogone ou un hexagone ou même une ellipse par exemple.

En conséquence, ce mode de gestion aboutit à une limitation de la zone de déplacement (qui a une forme projetée en forme de polygone, une forme quelconque ou encore une ellipse) à une zone de mesure effective (qui est le carré inscrit dans la projection de la butée mécanique).

Un but de la présente invention est de répondre aux inconvénients du document de l'art antérieur mentionnés ci-dessus et en particulier, tout d'abord, de proposer un procédé de contrôle d'une position et/ou d'un déplacement d'un élément d'affichage généré sur un écran d'affichage par une console de jeux vidéo accouplée à un contrôleur de jeux comprenant un levier de commande agencé pour être déplacé selon au moins deux degrés de liberté dans une zone déterminée par un utilisateur, qui exploite toute la zone de déplacement du levier de commande, tout en envoyant des coordonnées cartésiennes à la console de jeux.

Pour cela un premier aspect de l'invention concerne un procédé de contrôle d'une position et/ou d'un déplacement d'un élément d'affichage généré sur un écran d'affichage par une console de jeux vidéo accouplée à un contrôleur de jeux comprenant un levier de commande agencé pour être déplacé par un utilisateur selon au moins deux degrés de liberté dans une zone délimitée par une butée mécanique, le procédé comprenant les étapes consistant à :

- mesurer une position du levier de commande dans la zone déterminée avec au moins un capteur donnant en sortie au moins un signal électrique par degré de liberté,
- projeter dans un plan de base la position du levier de commande mesurée avec ledit au moins un capteur, pour déterminer un premier jeu de coordonnées,
- déterminer une figure homothétique d'une projection de la butée mécanique dans le plan de base, centrée sur une position de repos du levier de commande et passant par la position projetée du levier de commande dans le plan de base,

- déterminer un carré circonscrit à la figure homothétique,
- projeter sur le carré circonscrit au moins une coordonnée du premier jeu de coordonnées,
- calculer un deuxième jeu de coordonnées dans un repère cartésien, sur la base de la projection de ladite au moins une coordonnée du premier jeu de coordonnées sur le carré circonscrit, de sorte à pouvoir envoyer à la console le deuxième jeu de coordonnées cartésiennes qui est une image du premier jeu de coordonnées.

Le procédé selon la mise en oeuvre ci-dessus comprend une étape qui permet de définir un carré circonscrit à la figure homothétique (c'est-à-dire un carré qui entoure la figure homothétique, et dont au moins deux côtés sont chacun tangents à la figure homothétique), ce qui offre la possibilité d'effectuer une projection sur l'un des côtés du carré circonscrit de la position projetée dans le plan de base. Cette deuxième projection permet de passer d'une position projetée qui est sur la figure homothétique à une deuxième position projetée (définie par la projection d'au moins une des coordonnées de la position projetée) qui se trouve pour sa part sur le carré circonscrit. Ceci permet de définir aisément des coordonnées cartésiennes, et lorsque le levier de commande se trouve en butée mécanique sur une butée mécanique de forme hexagonale ou polygonale, une forme quelconque ou encore ellipsoïdale, on obtient naturellement des coordonnées qui sont sur le carré circonscrit à la projection de la butée mécanique (car le levier de commande est en butée mécanique).

En conséquence, la projection sur le carré circonscrit permet de définir un deuxième point de position (ayant pour coordonnées le deuxième jeu de coordonnées) qui permet de construire un deuxième vecteur entre l'origine (la position de repos) et le deuxième point dont la norme est plus grande ou égale que la norme d'un premier vecteur construit entre l'origine et la position projetée dans le plan de base.

Il est à noter que lorsque le levier de commande est déplacé selon un axe qui passe par un point de tangence entre le carré circonscrit à la projection et la figure homothétique (c'est-à-dire que le point projeté appartient simultanément aux deux figures), alors il n'y a aucune modification des coordonnées. En corollaire, lorsque le levier de commande est déplacé partout ailleurs que selon un tel axe, la projection sur le carré circonscrit revient à augmenter ou allonger l'une des coordonnées mesurées, pour définir le deuxième jeu de coordonnées cartésiennes.

De plus, le levier peut être monté en liaison rotule à doigt par rapport au contrôleur de jeux, c'est-à-dire qu'il est mobile selon deux rotations, mais pas en translation ni selon une troisième rotation (généralement autour du levier). Cependant, le procédé s'applique aussi à un levier qui est mobile selon deux translations dans un plan, et qui est bloqué selon les trois rotations et une translation. Comme indiqué, il suffit que le levier soit mobile selon deux degrés de liberté pour pouvoir appliquer la méthode objet de l'invention.

Par ailleurs, la projection dans le plan de base est avantageusement une projection orthogonale par rapport au plan de base, mais on peut envisager une projection oblique, c'est-à-dire que la direction de projection n'est pas perpendiculaire au plan de base, mais inclinée (au moins de quelques degrés par exemple) par rapport au plan de base. En d'autres termes, le plan de base peut être perpendiculaire au levier lorsque ce dernier est en position de repos, mais cela n'est pas nécessaire pour mettre en oeuvre la méthode objet de l'invention. Cependant, il faut veiller à conserver une bonne résolution, si bien que la direction de projection ne sera pas inclinée de plus de 20° par exemple par rapport au plan de base. Cela revient à effectuer une projection dans un plan de base qui n'est pas perpendiculaire au levier de commande dans sa position de repos.

En particulier, la figure homothétique à déterminer qui passe par la position projetée n'est pas un cercle. Autrement dit, la butée mécanique du levier ne se fait pas contre une portion de boîtier qui a une forme circulaire. L'invention concerne donc la gestion des coordonnées d'un levier qui évolue dans une zone délimitée par une butée de forme non circulaire.

Avantageusement, la butée mécanique présente une forme polygonale, et l'étape de détermination de la figure homothétique comprend une étape consistant à déterminer dans le plan de base un secteur angulaire dans lequel se trouve la position projetée du levier de commande, puis une étape consistant à déterminer une droite passant par la position projetée et parallèle à un côté de la projection polygonale de la butée mécanique dans le plan de base, contenu dans le secteur angulaire déterminé. Selon cette mise en oeuvre, si la butée mécanique est de forme polygonale, alors la détermination de la figure homothétique se fait en deux temps, avec une étape d'identification du secteur angulaire où se trouve la position projetée, pour pouvoir ensuite déterminer quel est le côté du polygone le plus proche.

Avantageusement, la butée mécanique présente une forme elliptique, et l'étape de détermination de la figure homothétique comprend une étape consistant à déterminer une ellipse de position centrée sur la position de repos du levier de commande et passant par la position projetée du levier de commande dans le plan de base.

Avantageusement, l'étape de projection de ladite au moins une coordonnée du premier jeu de coordonnées sur le carré circonscrit comprend une étape consistant à déterminer un point de position projetée comme étant un point d'intersection d'un axe passant par la position de repos du levier de commande et par la position projetée, avec le carré circonscrit. En d'autres termes, la position projetée est à nouveau projetée selon la direction d'un axe qui définit l'une des coordonnées d'un système de coordonnées polaires ou cylindriques (la distance à l'origine).

Selon la méthode préférée, l'étape de projection de ladite au moins une coordonnée du premier jeu de coordonnées sur le carré circonscrit comprend une étape consistant à projeter sur le carré circonscrit la position projetée, selon une direction de projection définie par un rayon de la figure homothétique, passant par la position projetée.

Avantageusement, l'étape de calcul du deuxième jeu de coordonnées cartésiennes comprend :

- une étape consistant à calculer une première longueur comme étant une longueur d'un segment reliant la position de repos à la position projetée,
- une étape consistant à calculer une deuxième longueur comme étant une longueur d'un segment reliant la position de repos au point de position projetée (se trouvant sur le carré circonscrit),
- une étape consistant à multiplier chaque coordonnée du premier jeu de coordonnée par un facteur défini par un ratio de la deuxième longueur sur la première longueur. Le premier jeu de coordonnées est selon le système cartésien, et la dernière étape de cette mise en oeuvre revient à effectuer une homothétie sur chaque coordonnée du premier jeu de coordonnées. Le rapport d'homothétie est supérieur ou égal à 1, et est égal au rapport de la distance à l'origine du point de position projetée (appartenant au carré circonscrit) sur la distance à l'origine de la position projetée (appartenant à la figure homothétique). Le rapport d'homothétie n'est égal à 1 que lorsque le levier de commande est déplacé selon une direction qui passe par un point de tangence entre le carré circonscrit et la figure homothétique. Dans tous les autres cas, il est supérieur à 1.

Selon une première alternative, l'étape de projection de ladite au moins une coordonnée du premier jeu de coordonnées sur le carré circonscrit comprend au moins une étape consistant à projeter la position projetée sur le carré circonscrit, selon une direction de projection définie par un axe d'un repère orthonormé.

Selon un cas particulier de la première alternative, l'étape de projection de ladite au moins une coordonnée du premier jeu de coordonnées sur le carré circonscrit comprend :

-   une seule étape consistant à projeter sur le carré circonscrit la position projetée, selon une première direction de projection définie par un axe d'un repère orthonormé définissant la plus courte distance entre la position projetée et le carré circonscrit, pour définir un point de projection unique. Cette méthode évite de calculer des coefficients de conversion, ce qui permet de rapidement transmettre le deuxième jeu de coordonnées.

Avantageusement, le deuxième jeu de coordonnées cartésiennes est défini par les coordonnées cartésiennes du point de projection unique.

Avantageusement, les étapes consistant à déterminer la figure homothétique, déterminer le carré circonscrit à la figure homothétique, projeter sur le carré circonscrit ladite au moins une coordonnée, et à calculer le deuxième jeu de coordonnées dans un repère cartésien (selon la mise en oeuvre préférée, ou la première alternative) sont effectuées de manière préalable pour toutes les positions projetées possibles du levier de commande dans le plan de base, de sorte à définir une table prédéfinie de conversion du premier jeu de coordonnées vers le deuxième jeu de coordonnées. Autrement dit, les étapes liées à la projection sont effectuées préalablement à l'utilisation du contrôleur de jeux, pour créer une table prédéfinie de conversion qui est stockée dans des moyens de stockage informatique du contrôleur de jeux. En conséquence, les calculs sont limités lors de l'utilisation du contrôleur de jeux.

Avantageusement, ladite table prédéfinie de conversion comprend en entrée le premier jeu de coordonnées, et donne en sortie un coefficient à multiplier avec chaque coordonnée du premier jeu de coordonnées, pour calculer le deuxième jeu de coordonnées. Les calculs se limitent à multiplier le premier jeu de coordonnées avec le coefficient.

Avantageusement, ladite table prédéfinie de conversion comprend en entrée le premier jeu de coordonnées, et donne en sortie le deuxième jeu de coordonnées.

Autrement dit, les étapes consistant à déterminer la figure homothétique, déterminer le carré circonscrit à la figure homothétique, projeter sur le carré circonscrit ladite au moins une coordonnée, et à calculer le deuxième jeu de coordonnées dans un repère cartésien sont effectuées en utilisant une table prédéfinie de conversion, ladite table prédéfinie de conversion comprenant en entrée le premier jeu de coordonnées, et donnant en sortie un coefficient à multiplier avec chaque coordonnée du premier jeu de coordonnées, pour calculer le deuxième jeu de coordonnées.

Avantageusement, le procédé de contrôle comprend une étape consistant à envoyer à la console de jeu le deuxième jeu de coordonnées cartésiennes.

Avantageusement, la position et/ou le déplacement de l'élément d'affichage généré sur l'écran d'affichage est modifié sur la base du deuxième jeu de coordonnées cartésiennes.

Avantageusement, les étapes jusqu'à l'étape de calcul du deuxième jeu de coordonnées sont réalisées avec une première résolution, et il est prévu une étape consistant à réduire la résolution avant l'étape d'envoi du deuxième jeu de coordonnées, afin d'envoyer le deuxième jeu de coordonnées selon une deuxième résolution, inférieure à la première résolution. Cette mise en oeuvre permet de garder une bonne précision pendant les calculs, et d'envoyer le deuxième jeu de coordonnées selon un format qui ne nécessite pas beaucoup de temps de calcul pour la console de jeux ou de temps transmission entre le contrôleur et la console.

D'autres caractéristiques et avantages de la présente invention apparaîtront plus clairement à la lecture de la description détaillée qui suit de trois modes de réalisation de l'invention donnés à titre d'exemples nullement limitatifs et illustrés par les dessins annexés, dans lesquels :

-   la figure 1 représente une vue en coupe d'un levier de commande d'un contrôleur de jeux vidéo, pour commander une position et/ou un déplacement d'un élément d'affichage généré sur un écran d'affichage par une console de jeux vidéo accouplée au contrôleur de jeux, par le procédé selon l'invention ;

-   la figure 2 représente une première mise en oeuvre du traitement de la position mesurée du levier de commande de la figure 1 effectué par le procédé selon l'invention ;

-   la figure 3 représente une deuxième mise en oeuvre du traitement de la position mesurée du levier de commande de la figure 1 effectué par le procédé selon l'invention ;

- la figure 4 représente des possibilités de formes adoptées pour réaliser une butée mécanique du levier de commande.

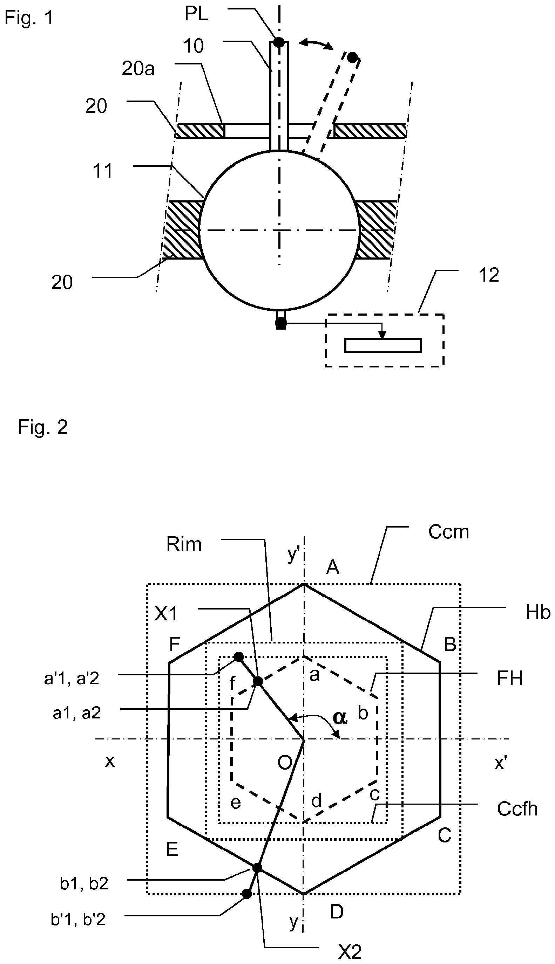

La figure 1 représente un levier de commande 10 d'un contrôleur de jeux. Un tel levier de commande 10 peut être également appelé "joystick" ou "stick". Typiquement, un tel levier de commande 10 est disposé sur une surface supérieure d'un contrôleur de jeux, pour pouvoir être actionné et déplacé par un utilisateur d'une console de jeux vidéo, pour provoquer par exemple un mouvement d'un personnage, un déplacement d'une mire de visée, ou encore un mouvement d'une caméra virtuelle d'un jeu vidéo.

De manière générale, le levier de commande 10 est donc mobile par rapport à un boîtier 20 du contrôleur de jeux vidéo, et peut être articulé par rapport au boîtier 20 selon une liaison rotule comme représenté figure 1. D'autres liaisons entre le levier de commande 10 et le boîtier 20 sont possibles, comme par exemple une liaison qui ne permet qu'un mouvement plan du levier de commande 10.

Toutefois, le levier de commande 10 ne peut être déplacé que dans une zone de déplacement prédéfinie, et limitée par une butée 20a. Dans le cas représenté, la butée 20a est une arête du boîtier 20, formant un trou par lequel le levier de commande 10 passe au travers du boîtier 20. Afin de détecter les mouvements du levier de commande 10, ce dernier est relié à au moins un capteur de position 12, tel qu'un potentiomètre. Un tel capteur de position 12 permet de détecter les mouvements du levier de commande 10, et donc de calculer par exemple une position d'un point PL du levier de commande 10.

Dans le cas présent, le levier de commande 10 peut être déplacé ici selon deux degrés de liberté, si bien que l'on peut bien entendu prévoir deux capteurs de position, ou un seul capteur de position avec deux pistes de mesure pour mesurer avec précision toutes les positions que le levier de commande 10 peut occuper.

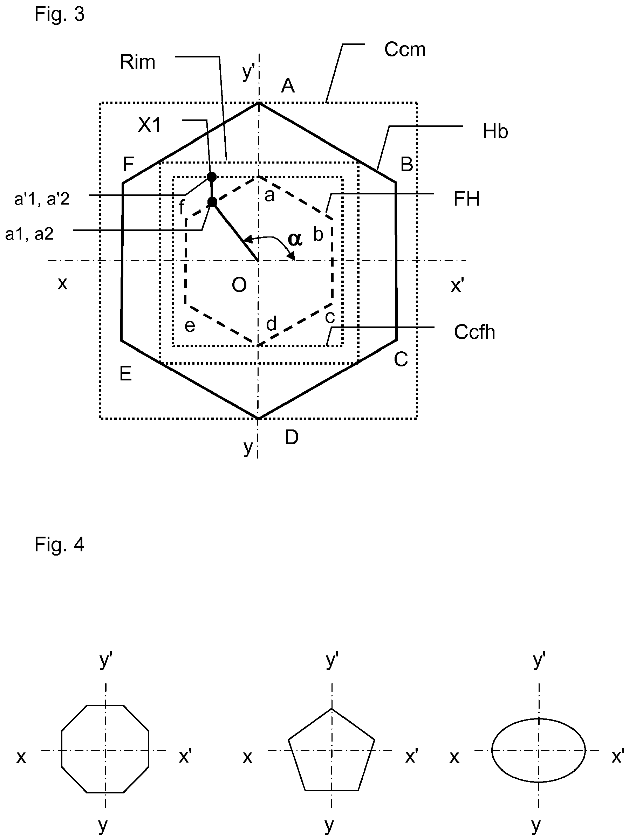

La butée 20a est par exemple un polygone (tel qu'un pentagone, hexagone, heptagone, octogone, dodécagone, ellipse), et si on projette les positions du point PL dans un plan de base, perpendiculaire ou sensiblement perpendiculaire au levier de commande lorsque ce dernier est en position de repos (comme représenté figure 1 en traits pleins), les positions projetées sont toutes contenues dans un hexagone de butée Hb visible figures 2 ou 3, et qui a pour sommets A, B, C, D, E et F. Le plan de base peut être incliné à quelques degrés d'un plan perpendiculaire au levier de commande lorsque ce dernier est en position de repos, et les projections seront toutes contenues dans un hexagone non régulier dans le cas où la butée mécanique est un hexagone.

En effet, on voit figures 2 et 3 l'hexagone de butée Hb, qui est la limite du déplacement du levier de commande 10. De manière conventionnelle, on comprend que lorsque le levier de commande 10 est en butée, alors le contrôleur de jeux doit envoyer à la console de jeux l'information que l'intensité du déplacement est maximale.

Cependant, le mouvement du levier de commande 10 est limité par un hexagone, mais la console de jeu doit recevoir une position du levier de commande 10 sous la forme d'un jeu de coordonnées cartésiennes, et la norme d'un vecteur entre l'origine du repère cartésien et la position projetée dans le plan de base doit être maximale.

Dans le repère cartésien (x-x' ; y-y') représenté figures 2 et 3, lorsque le levier de commande 10 est en butée vers le haut, selon une diagonale à 45°, le signal envoyé à la console doit être à pleine échelle, donc les coordonnées cartésiennes sont alors par exemple (1, 1). Cependant, si on trace un rectangle inscrit Rim dans l'hexagone de butée Hb, et si le levier de commande 10 est déplacé vers le haut hors du rectangle inscrit Rim, et toujours dans l'hexagone de butée Hb sans être en butée, il faudrait encore augmenter la coordonnée selon l'axe y'-y, mais cela fausserait l'interprétation faite par la console car la norme du vecteur entre l'origine et la position projetée dans le plan de base serait supérieure à celle du vecteur lorsque le levier de commande 10 est en butée sur la diagonale.

En conséquence, il y aurait une incohérence de l'intensité du déplacement restitué par la console : intensité 1 lorsque la position projetée du levier de commande est sur la diagonale à 45° et sur l'hexagone de butée Hb (levier de commande 10 en butée à 45°), et intensité supérieure lorsque la position projetée du levier de commande est hors du rectangle inscrit Rim, mais pas sur l'hexagone de butée Hb (levier de commande 10 pas en butée).

Afin d'éviter cette incohérence, dès que la position projetée du levier commande 10 sort du rectangle inscrit Rim, une des coordonnées cartésiennes est imposée à 1, ce qui revient à ignorer quatre zones de déplacement, qui sont des zones de plan définies par les zones de l'hexagone de butée Hb qui sont hors du rectangle inscrit Rim.

On comprend que lors d'un déplacement du levier de commande 10 selon une direction cardinale (la position projetée est donc sur un des axes yy' ou xx'), alors on atteint la pleine échelle dès que la position projetée est sur ou dépasse le carré inscrit Rim.

Afin de remédier à cet inconvénient, et pour prendre en compte toute la zone de déplacement de l'hexagone de butée Hb, l'invention propose de calculer le jeu de coordonnées qui sera envoyé à la console de jeux en faisant une homothétie à partir de la position projetée du levier de commande 10 dans le plan de base.

La figure 2 représente une première mise en oeuvre de ce calcul, dans deux cas de figure.

Dans le premier cas de figure, le levier de commande est dans la position X1, et la position projetée dans le plan base a pour coordonnées (a1, a2). Dans un premier temps, on détermine une figure homothétique FH de l'hexagone de butée Hb, qui passe par la position projetée de coordonnées (a1, a2), et qui est centrée sur la position de repos du levier de commande (l'origine du repère (xx', yy')). Il s'agit de l'hexagone abcdef.

Pour cette étape, le procédé détermine d'abord l'angle $\alpha$ entre un axe du repère xx' et le rayon qui passe par la position projetée, pour déterminer dans quel secteur angulaire du plan se trouve la position projetée. En effet, cette détermination angulaire est nécessaire pour déterminer quelle équation de droite doit être résolue pour trouver un bord parallèle à l'hexagone de butée Hb.

Dans le cas représenté, l'angle $\alpha$ permet de déterminer que la position projetée se trouve sur une droite parallèle au bord FA de l'hexagone de butée Hb. Il est alors possible de déterminer avec certitude la droite parallèle à (FA) et alors la figure homothétique FH qui passe par la position projetée de coordonnées (a1, a2), qui est l'hexagone de sommets abcdef.

Ensuite, le procédé détermine un carré circonscrit Ccfh à la figure homothétique FH (il s'agit du carré qui a pour côté le double de la longueur Oa, c'est-à-dire l'ordonnée a'2), et détermine le point d'intersection du rayon passant par la position projetée de coordonnées (a1, a2) avec le carré circonscrit Ccfh, qui a pour coordonnées (a'1, a'2).

Ce sont les coordonnées (a'1, a'2) qui seront envoyées à la console de jeux. Pour les calculer, on détermine la longueur du rayon R1 de la figure homothétique FH qui passe par le point (a1, a2), grâce au théorème de Pythagore (équation 1). Et ensuite, on détermine la longueur R2 du segment qui a pour extrémités l'origine du repère et le point de coordonnées (a'1, a'2) grâce au théorème de Thalès (équation 2).

## Équation 1

$$R1 = \sqrt{(a1^2 + a2^2)}$$

## Équation 2

$$R2 = R1.a'2/a2$$

Il reste ensuite à multiplier chaque coordonnée du premier jeu de coordonnées (a1, a2) par le rapport R2/R1 pour trouver les coordonnées du deuxième jeu de coordonnées (a'1, a'2).

Le procédé effectue donc une homothétie basée sur une différence de dimension entre la figure homothétique FH et son carré circonscrit Ccfh. On "augmente" ou on "déplace" artificiellement la position projetée vers le carré circonscrit Ccfh, pour trouver le deuxième jeu de coordonnées. Il s'agit ici d'une projection selon la direction radiale.

Il est à noter que le deuxième jeu de coordonnées est égal au premier jeu de coordonnées lorsque le levier de commande est déplacé uniquement sur une direction cardinale verticale (le long de l'axe yy') : l'homothétie est alors de rapport 1. Par ailleurs, le rapport d'homothétie est maximal lorsque le levier de commande 10 est déplacé le long d'une diagonale à 45°.

En conséquence, la console reçoit bien un second jeu de coordonnées cartésiennes, avec la pleine échelle uniquement lorsque le levier de commande est en butée, et cela sans ignorer de zone de mesure.

La position X2 de la figure 2 représente justement le levier de commande 10 en butée, et les coordonnées de la position projetée sont (b1, b2), située sur l'hexagone de butée Hb. La transformation revient à calculer la projection de la position projetée sur le carré circonscrit Ccm selon la direction radiale qui passe par la position projetée, pour calculer le deuxième jeu de coordonnées (b'1, b'2) qui sera envoyé à la console.

Le procédé selon l'invention peut effectuer les étapes de détermination de la figure homothétique, du carré circonscrit Ccfh et de projection à chaque mesure de la position du levier de commande 10 pour calculer le deuxième jeu de coordonnées avec le rapport d'homothétie, ou bien on peut bâtir une table prédéfinie en calculant le rapport d'homothétie pour toutes les positions possibles, stocker cette table prédéfinie dans le contrôleur de jeux et simplement chercher le rapport adéquat en fonction d'une position mesurée, et multiplier les coordonnées mesurées par le rapport adéquat pour trouver le deuxième jeu de coordonnées. On peut en alternative stocker directement le deuxième jeu de coordonnées dans la table prédéfinie.

La figure 3 représente une première alternative. Dans cette alternative, la détermination de la figure homothétique FH et du carré circonscrit Ccfh sont identiques. Cependant, au lieu de projeter la position projetée selon la direction radiale, le procédé effectue une seule projection parallèle à l'un des axes xx' ou yy', et en particulier vers le côté du carré circonscrit qui est le plus proche, pour trouver le deuxième jeu de coordonnées cartésiennes à envoyer à la console de jeux.

En particulier, dans le cas de figure où le levier de commande 10 est dans la position X1, la position projetée a pour premier jeu de coordonnées (a1, a2). Le côté du carré circonscrit Ccfh le plus proche est le côté supérieur horizontal, si bien que les coordonnées du deuxième jeu de coordonnées seront (a'1, a'2), avec :

a'1 = a1

a'2 = distance Oa (déterminée lors de la détermination de la figure homothétique FH).

La figure 4 représente des variantes de la forme de la butée mécanique définissant la zone de déplacement du levier de commande, avec de gauche à droite un octogone, un pentagone, ou une ellipse.

Dans le cas des polygones, la méthode utilisera, avant de déterminer l'équation de la figure homothétique qui passe par le position projetée, une détermination du secteur angulaire où se trouve la position projetée, pour identifier avec quel côté de la butée mécanique il faut déterminer la droite parallèle passant par la position projetée et définissant la figure homothétique. Dans le cas d'un octogone, il y a huit secteurs angulaires, dans le cas d'un pentagone, il y a cinq secteurs angulaires.

Dans la cas d'une ellipse, il n'y a pas besoin de déterminer préalablement un secteur angulaire, le procédé peut, après la projection de la position du levier dans le plan de base, directement déterminer l'équation d'une ellipse homothétique à la butée, et qui passe par la position projetée.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est fait référence à un premier jeu de coordonnées, et il n'est pas précisé dans quel format se trouve ce premier jeu de coordonnées. L'invention peut fonctionner avec un premier jeu de coordonnées cylindriques, sphériques, ou même cartésiennes.

De plus, il est apparent que l'invention inclut une étape consistant à fournir une butée de forme polygonale ou elliptique. En effet, l'invention concerne la conversion de coordonnées d'un levier manipulé dans les limites d'une butée mécanique, il y a donc une étape qui consiste à fabriquer et fournir une telle butée mécanique de forme polygonale ou elliptique sur un contrôleur de jeux.

Enfin, il est possible d'établir la table prédéfinie de conversion pour n'importe lequel des aspects de l'invention exposés ci-dessus.

**Revendications**

1. Procédé de contrôle d'une position et/ou d'un déplacement d'un élément d'affichage généré sur un écran d'affichage par une console de jeux vidéo accouplée à un contrôleur de jeux comprenant un levier de commande (10) agencé pour être déplacé par un utilisateur selon au moins deux degrés de liberté dans une zone délimitée par une butée mécanique, le procédé comprenant les étapes consistant à :

   - mesurer une position du levier de commande (10) dans la zone déterminée avec au moins un capteur (12) donnant en sortie au moins un signal électrique par degré de liberté,
   - projeter dans un plan de base la position du levier de commande (10) mesurée avec ledit au moins un capteur (12), pour déterminer un premier jeu de coordonnées,
   - déterminer une figure homothétique (FH) d'une projection de la butée mécanique dans le plan de base, centrée sur une position de repos du levier de commande (10) et passant par la position projetée du levier de commande (10) dans le plan de base,
   - déterminer un carré circonscrit (Ccfh) à la figure homothétique (FH),
   - projeter sur le carré circonscrit (Ccfh) au moins une coordonnée du premier jeu de coordonnées,
   - calculer un deuxième jeu de coordonnées dans un repère cartésien, sur la base de la projection de ladite au moins une coordonnée du premier jeu de coordonnées sur le carré circonscrit (Ccfh), de sorte à pouvoir envoyer à la console le deuxième jeu de coordonnées cartésiennes qui est une image du premier jeu de coordonnées.

2. Procédé de contrôle selon la revendication précédente, dans lequel la butée mécanique présente une forme polygonale, et dans lequel l'étape de détermination de la figure homothétique (FH) comprend une étape consistant à déterminer dans le plan de base un secteur angulaire dans lequel se trouve la position projetée du levier de commande, puis une étape consistant à déterminer une droite passant par la position projetée et parallèle à un côté de la projection polygonale de la butée mécanique dans le plan de base, contenu dans le secteur angulaire déterminé.

3. Procédé de contrôle selon la revendication 1, dans lequel la butée mécanique présente une forme elliptique, et dans lequel l'étape de détermination de la figure homothétique (FH) comprend une étape consistant à déterminer une ellipse de position centrée sur la position de repos du levier de commande (10) et passant par la position projetée du levier de commande (10) dans le plan de base.

4. Procédé de contrôle selon l'une des revendications précédentes, dans lequel l'étape de projection de ladite au moins une coordonnée du premier jeu de coordonnées sur le carré circonscrit (Ccfh) comprend une étape consistant à déterminer un point de position projetée comme étant un point d'intersection d'un axe passant par la position de repos du levier de commande (10) et par la position projetée, avec le carré circonscrit (Ccfh).

5. Procédé de contrôle selon l'une des revendications 1 à 3, dans lequel l'étape de projection de ladite au moins une coordonnée du premier jeu de coordonnées sur le carré circonscrit (Ccfh) comprend une étape consistant à projeter sur le carré circonscrit (Ccfh) la position projetée, selon une direction de projection définie par un rayon de la figure homothétique (FH), passant par la position projetée.

6. Procédé de contrôle selon l'une des revendications 4 ou 5, dans lequel l'étape de calcul du deuxième jeu de coordonnées cartésiennes comprend :

- une étape consistant à calculer une première longueur comme étant une longueur d'un segment reliant la position de repos à la position projetée,
- une étape consistant à calculer une deuxième longueur comme étant une longueur d'un segment reliant la position de repos au point de position projetée,
- une étape consistant à multiplier chaque coordonnée du premier jeu de coordonnée par un facteur défini par un ratio de la deuxième longueur sur la première longueur.

7. Procédé de contrôle selon l'une des revendications 1 à 3, dans lequel l'étape de projection de ladite au moins une coordonnée du premier jeu de coordonnées sur le carré circonscrit (Ccfh) comprend au moins une étape consistant à projeter la position projetée sur le carré circonscrit (Ccfh), selon une direction de projection définie par un axe d'un repère orthonormé.

8. Procédé de contrôle selon l'une des revendications 1 à 3 ou 7, dans lequel l'étape de projection de ladite au moins une coordonnée du premier jeu de coordonnées sur le carré circonscrit (Ccfh) comprend :

- une seule étape consistant à projeter sur le carré circonscrit (Ccfh) la position projetée, selon une première direction de projection définie par un axe d'un repère orthonormé définissant la plus courte distance entre la position projetée et le carré circonscrit (Ccfh), pour définir un point de projection unique.

9. Procédé de contrôle selon la revendication précédente, dans lequel le deuxième jeu de coordonnées cartésiennes est défini par les coordonnées cartésiennes du point de projection unique.

10. Procédé de contrôle selon l'une des revendications 1 à 8, dans lequel les étapes consistant à déterminer la figure homothétique (FH), déterminer le carré circonscrit (Ccfh) à la figure homothétique (FH), projeter sur le carré circonscrit (Ccfh) ladite au moins une coordonnée, et à calculer le deuxième jeu de coordonnées dans un repère cartésien sont effectuées de manière préalable pour toutes les positions projetées possibles du levier de commande (10) dans le plan de base, de sorte à définir une table prédéfinie de conversion du premier jeu de coordonnées vers le deuxième jeu de coordonnées.

11. Procédé de contrôle selon la revendication précédente, dans lequel ladite table prédéfinie de conversion comprend en entrée le premier jeu de coordonnées, et donne en sortie un coefficient à multiplier avec chaque coordonnée du premier jeu de coordonnées, pour calculer le deuxième jeu de coordonnées.

12. Procédé de contrôle selon la revendication 10, dans lequel ladite table prédéfinie de conversion comprend en entrée le premier jeu de coordonnées, et donne en sortie le deuxième jeu de coordonnées.

13. Procédé de contrôle selon l'une des revendications précédentes, comprenant une étape consistant à envoyer à la console de jeu le deuxième jeu de coordonnées cartésiennes.

14. Procédé de contrôle selon la revendication précédente, dans lequel les étapes jusqu'à l'étape de calcul du deuxième jeu de coordonnées sont réalisées avec une première résolution, et dans lequel il est prévu une étape consistant à réduire la résolution avant l'étape d'envoi du deuxième jeu de coordonnées, afin d'envoyer le deuxième jeu de coordonnées selon une deuxième résolution, inférieure à la première résolution.

15. Procédé de contrôle selon l'une des revendications précédentes, dans lequel la position et/ou le déplacement de l'élément d'affichage généré sur l'écran d'affichage est modifiée sur la base du deuxième jeu de coordonnées cartésiennes.

Fig. 1

PL

10

20a

20

11

20

12

Fig. 2

Rim

Ccm

y'

A

X1

Hb

F

B

a'1, a'2

FH

a1, a2

f

a

α

b

x

O

x'

e

d

c

b1, b2

Ccfh

E

C

b'1, b'2

y

D

X2

Fig. 3

Fig. 4

**Europäisches Patentamt**
**European Patent Office**
**Office européen des brevets**

## RAPPORT DE RECHERCHE EUROPEENNE

Numéro de la demande

EP 17 30 6074

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2013/100021 A1 (LARSEN ERIC J [US] ET AL) 25 avril 2013 (2013-04-25) <br> * abrégé * <br> * alinéa [0004]; figure 1b * <br> * alinéa [0009] * <br> * alinéa [0052] - alinéa [0056] * <br> * alinéa [0072] - alinéa [0074] * <br> ----- | 1-15 | INV. <br> A63F13/22 <br> A63F13/20 <br> G05G9/047 |
| A | FR 3 031 404 A1 (BIGBEN INTERACTIVE SA [FR]) 8 juillet 2016 (2016-07-08) <br> * abrégé * <br> * page 1, ligne 1 - page 10, ligne 3 * <br> ----- | 1-15 | |
| A | WO 2014/106594 A1 (MOVEA [FR]) 10 juillet 2014 (2014-07-10) <br> * abrégé * <br> * page 1, ligne 1 - page 5, ligne 11 * <br> ----- | 1-15 | |
| A | EP 2 524 721 A2 (NINTENDO CO LTD [JP]) 21 novembre 2012 (2012-11-21) <br> * alinéa [0071] - alinéa [0072] * <br> * alinéa [0081] * <br> * alinéa [0174] * <br> ----- | 1-15 | DOMAINES TECHNIQUES RECHERCHES (IPC) <br><br> A63F <br> G05G |
| A | US 2014/298942 A1 (ICHIKI SHUNSUKE [JP]) 9 octobre 2014 (2014-10-09) <br> * abrégé * <br> * alinéa [0002] - alinéa [0005] * <br> ----- | 1-15 | |
| A | JP 2013 176457 A (HORI CO LTD) 9 septembre 2013 (2013-09-09) <br> * abrégé * <br> ----- | 1-15 | |

Le présent rapport a été établi pour toutes les revendications

| Lieu de la recherche | Date d'achèvement de la recherche | Examinateur |
|---|---|---|
| Munich | 10 janvier 2018 | Garton, Paul |

**ANNEXE AU RAPPORT DE RECHERCHE EUROPEENNE
RELATIF A LA DEMANDE DE BREVET EUROPEEN NO.**

EP 17 30 6074

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-01-2018

| Document brevet cité au rapport de recherche | | Date de publication | Membre(s) de la famille de brevet(s) | | Date de publication |
|---|---|---|---|---|---|
| US 2013100021 | A1 | 25-04-2013 | CN 104321115 A<br>EP 2768589 A1<br>EP 3241594 A1<br>JP 5710846 B2<br>JP 2014535102 A<br>US 2013100021 A1<br>WO 2013059472 A1 | | 28-01-2015<br>27-08-2014<br>08-11-2017<br>30-04-2015<br>25-12-2014<br>25-04-2013<br>25-04-2013 |
| FR 3031404 | A1 | 08-07-2016 | AUCUN | | |
| WO 2014106594 | A1 | 10-07-2014 | FR 3000683 A1<br>US 2015338875 A1<br>WO 2014106594 A1 | | 11-07-2014<br>26-11-2015<br>10-07-2014 |
| EP 2524721 | A2 | 21-11-2012 | EP 2524721 A2<br>JP 5844999 B2<br>JP 2012243091 A | | 21-11-2012<br>20-01-2016<br>10-12-2012 |
| US 2014298942 | A1 | 09-10-2014 | CN 103827767 A<br>JP 5768578 B2<br>JP 2013037526 A<br>US 2014298942 A1<br>WO 2013021890 A1 | | 28-05-2014<br>26-08-2015<br>21-02-2013<br>09-10-2014<br>14-02-2013 |
| JP 2013176457 | A | 09-09-2013 | AUCUN | | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2450776 A1